# EUROPÄISCHE PATENTANMELDUNG

(11) **EP 0 654 450 A2**
(43) Veröffentlichungstag der Anmeldung: **24.05.1995**
(21) Anmeldenummer: 94203250.9
(22) Anmeldetag: 08.11.1994
(51) Int. Cl.: C03B 5/12

(54) **Verfahren und Vorrichtung zum Einschmelzen von festen Verbrennungsrückständen**

(30) Priorität: 22.11.1993 DE 4339675
(71) Anmelder: MESSER GRIESHEIM GMBH, D-60547 Frankfurt (DE)
(72) Erfinder: Gross, Gerhard, Dr., D-47877 Willich (DE); Lichtmann, Frank, Dr., D-51645 Gummersbach (DE)

(57) **Zusammenfassung**

Die Erfindung betrifft ein Verfahren und eine Vorrichtung zum Einschmelzen von festen Verbrennungsrückständen wie Schlacken, Aschen und Flubstäube aus Abfallverbrennungsanlagen (11) mit festen, flüssigen und/oder gasförmigen fossilen Brennstoffen in einer Schmelzvorrichtung. Um die notwendige Energie durch Verbrennen von fossilen Brennstoffen zu reduzieren, erfolgt die Zuführung der Verbrennungsrückstände (12) von der Abfallverbrennungsanlage (11) direkt in die Einfüllöffnung (13) der Schmelzvorrichtung. Die Schmelzvorrichtung ist als Schachtofen (10) mit feuerfest ausgekleidetem Ofenraum (14, 15) ausgebildet, wobei die Verbrennungsrückstände (12) mittels eines Brennstoff / Sauerstoff-Gemisches oder mittels eines Brennstoff / Sauerstoff-Luft-Gemisches, welches unterhalb der Verbrennungsrückstandsschüttung (21) in den Schachtofen eingebracht wird, eingeschmolzen werden.

## Beschreibung

Die Erfindung betrifft ein Verfahren und eine Vorrichtung zum Einschmelzen von festen Verbrennungsrückständen nach dem Oberbegriff des Anspruches 1.

Bei der Entsorgung von Abfällen in Verbrennungsanlagen fallen Aschen, Schlacken und Filterstäube an, die aufgrund der überlicherweise vorherrschenden Verbrennungstemperaturen von 850 bis 1050°C nur in kristalliner oder in gesinterter Form vorliegen. Diese Verbrennungsrückstände enthalten Schwermetalle, Salze und organische Schadstoffe, so daß zur Entsorgung fast ausschließlich die Deponierung zur Verfügung steht. Rost-Aschen und Rost-Schlacken werden zur Zeit auf Hausmüll- und Monodeponien gelagert, soweit diese nicht als minderwertige Baustoffe eingeschränkt Verwendung finden. Kesselasche und Flugstäube müssen auf Sondermülldeponien gelagert werden. Durch Einwirkung von Regen- oder Grundwasser werden die Schwermetalle, Salze oder organischen Schadstoffe gelöst und können unkontrolliert in das Grundwasser eindringen. Sich ständig verknappende Deponieräume einerseits, und die Verschärfung der gesetzlichen Bestimmungen über die Vermeidung und Verwertung von Verbrennungsrückständen andererseits, erfordern eine wesentliche Verbesserung von deren chemischen und physikalischen Eigenschaften.

Aufgrund dieser Probleme wurden bereits eine Vielzahl von physikalischen, chemischen und thermischen Behandlungsverfahren, wie z.B. Verfestigungsverfahren, Waschverfahren, Baustoffherstellungsverfahren, Niedertemperaturverfahren und Schmelzverfahren entwickelt.

Diese bisher bekannten Verfahren lösen die beschriebenen Probleme nur unvollständig, wie z.B. die physikalischen und chemischen Verfahren, oder bedingen einen hohen apparativen und energetischen Aufwand.

Es ist bekannt, daß im allgemeinen die Schmelzverfahren die nachhaltigsten Verbesserungen der Eigenschaften der Verbrennungsrückstände erbringen. Aufgrund der Überführung der Verbrennungsrückstände der Abfallverbrennungsanlagen in die schmelzflüssige Phase werden anorganische Schadstoffe entweder auslaugsicher in eine Glasmatrix eingebunden oder werden aus der Schmelze entfernt. Organische Schadstoffe werden aufgrund der hohen Temperaturen von 1300 bis 1500°C vollständig vernichtet.

Ein bisher bekanntes Schmelzverfahren beruht auf dem Einschmelzen der Verbrennungsrückstände aus Abfallverbrennungsanlagen in einer mit fossiler Energie beheizten Schmelzwanne.

Dabei ist es nötig, zuvor den eisenhaltigen Metallschrott vollständig aus dem heißen Verbrennungsrückstand zu entfernen, um eine Schädigung der feuerfesten Ausmauerung der Schmelzwanne zu vermeiden. Die aufwendige Magnetscheidung des eisenhaltigen Metallschrotts läßt aus technischen Gründen nur eine maximale Temperatur von ca. 300°C zu. Die dadurch erforderliche Abkühlung der Verbrennungsrückstände im Naßentschlacker verursacht einen um ca. 30 % höheren Energieaufwand beim Einschmelzen.

Das Einschmelzen von heißen eisenhaltigen Verbrennungsrückständen ist prinzipiell mit einem Lichtbogen- oder Plasmaschmelzverfahren unter Einsatz von wertvoller elektrischer Energie und mit einem höheren Anteil der Energiekosten pro Tonne möglich.

Demgegenüber werden bei den Schmelzverfahren mit fossiler Energie preiswerte Primärenergien eingesetzt. Aus Gründen der Energieeinsparung wäre das Einschmelzen der Verbrennungsrückstände direkt nach der Verbrennung in Abfallverbrennungsanlagen im heißen Zustand auch bei Schmelzverfahren mit fossiler Energie wünschenswert.

Der Erfindung liegt daher die Aufgabe zugrunde, ein mit fossilen Brennstoffen betriebenes Verfahren und eine Vorrichtung zum Einschmelzen von festen Verbrennungsrückständen zu schaffen, mit dem eine Energieeinsparung ohne hohen apparativen Aufwand erreicht werden kann.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen der Erfindung sind in den Unteransprüchen angegeben.

Durch die Erfindung wird die Energiebilanz beim Einschmelzen von Verbrennungsrückständen aus Abfallverbrennungsanlagen verbessert, weil vorzugsweise die heißen nicht aufbereiteten Verbrennungsrückstände direkt über eine Aufgabevorrichtung der Einfüllöffnung eines Schachtofens zugeführt werden. Gleichzeitig wird der Nachteil einer Schädigung der feuerfesten Ausmauerung minimiert, weil die Schmelze in einem definiert festgelegten Bereich des Schachtofens, nämlich im Unterofen, gesammelt wird, der preiswert repariert werden kann, weil der Unterofen des Schachtofens für die Behebung von Schäden am Feuerfestmaterial bereits ausgelegt ist.

Die Trennung der heißen nicht aufbereiteten Verbrennungsrückstände von der sich im Unterofen befindlichen Schmelze wird durch einen im Schachtofen befindlichen wassergekühlten Rost erreicht, auf dem die Schüttung aus den Verbrennungsrückständen ruht.

Ein Ausführungsbeispiel der Erfindung ist in der Zeichnung dargestellt und wird im folgenden näher beschrieben.

Es zeigen
- Fig. 1: einen Schachtofen nach der Erfindung zum Einschmelzen fester Verbrennungsrückstände mit einem Brennstoff / Sauerstoff-Luft-Brenner;

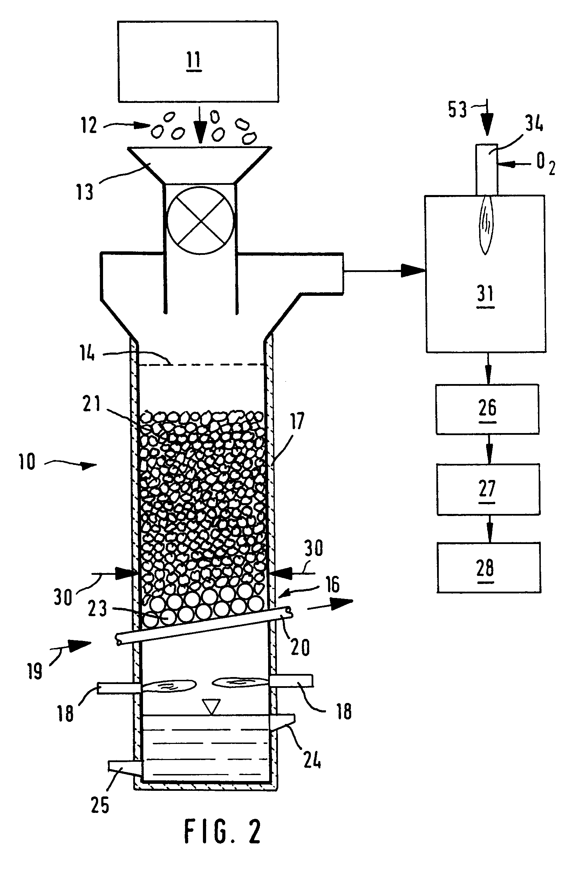

- Fig. 2: einen Schachtofen nach der Erfindung zum Einschmelzen von festen Verbrennungsrückständen und festen Brennstoffen mit einem Brennstoff / Sauerstoff-Luft-Brenner und O₂-Injektionslanzen.

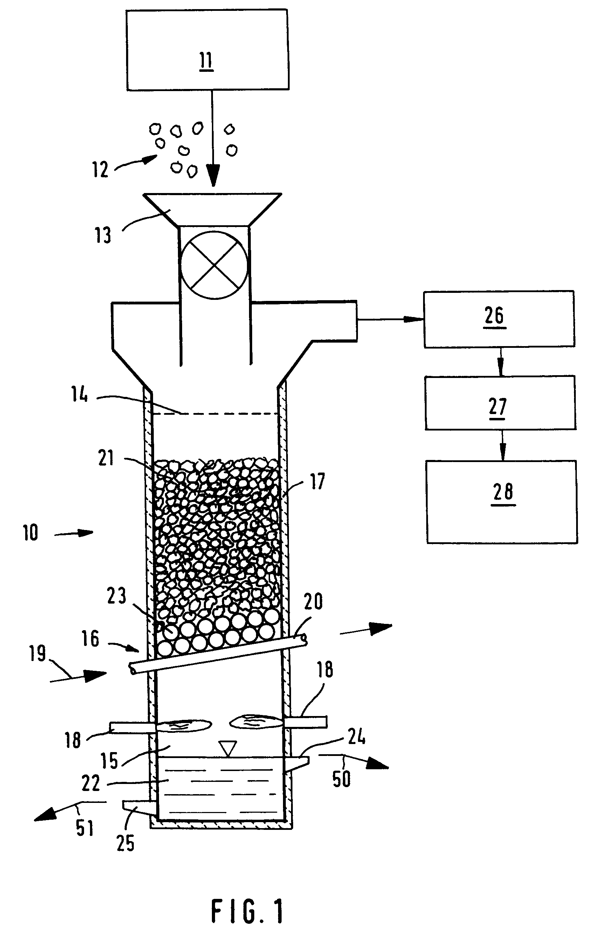

Bei dem in Fig. 1 dargestellten Schachtofen 10 werden die in der Abfallverbrennungsanlage 11 entstehenden festen Verbrennungsrückstände wie Schlacken, Aschen und Flugstäube, vorzugsweise im heißen, nicht aufbereiteten Zustand, d.h. ohne Zerkleinerung und Metallabscheidung, direkt über die Einfüllöffnung 13 chargiert. Eine Zuführung der Verbrennungsrückstände im kalten als auch im naßkalten Zustand ist selbstverständlich ebenfalls möglich. Der Schachtofen 10 ist unterteilt in einen Oberofen 14 und einen Unterofen 15 mit dazwischenliegendem Rost 16. Die zylindrische, senkrecht stehende mit feuerfestem Material 17 ausgekleidete Röhre des Schachtofens ist unterhalb des Rosts 16 mit Brennstoff / Sauerstoff- bzw. mit Brennstoff / Sauerstoff-Luft-Brenner 18 ausgerüstet. Die Verbrennung der heißen nicht aufbereiteten Verbrennungsrückstände findet auf dem Rost 16 statt, der aus parallel in einem Winkel von ca. 5° zur Horizontalen angeordneten wassergekühlten Rohren besteht. Das Kühlwasser 19 tritt als Kreislauf- oder Durchlaufstrom durch die Rohre 20. Durch diesen Rost 16 wird eine räumliche Trennung zwischen der Verbrennungsrückstandsschüttung 21 und der sich im Unterofen 15 befindlichen Schmelze 22 erreicht.

Unmittelbar auf dem Rost 16 befinden sich eine oder mehrere Lagen aus feuerfesten, verschleißfesten, keramischen Kugeln 23, die ein Durchfallen der unverbrannten Verbrennungsrückstände 12 in die Schmelze 22 vermeiden. Die bei dem Erhitzen, Aufheizen, Aufschmelzen o.ä. der Verbrennungsrückstandsschüttung 21 entstehende Schmelze fließt durch die Zwischenräume der Kugeln 23 und der wassergekühlten Rohre 20 und wird im Unterofen 15 gesammelt. Aufgrund der Dichteunterschiede zwischen der mineralischen und metallischen Schmelze findet eine Separierung statt, wobei die mineralische Schmelze 50 über eine Rinne 24 kontinuierlich oben und die metallische Schmelze 51 über eine Rinne 25 kontinuierlich unten aus dem Schachtofen abgezogen werden. Die mineralische Schmelze wird anschließend weiteren Verarbeitungsschritten, wie z.B. einer Granulierung oder Verspinnung zugeführt.

Unterhalb des wassergekühlten Rostes 16 sind mit gasförmigen oder flüssigen fossilen Brennstoffen betriebene Brenner 18 symmetrisch angeordnet. Als Oxidationsmedium dient sauerstoffangereicherte Luft oder technisch reiner Sauerstoff in einer Konzentration zwischen 30 Vol.% O₂ < O₂ < 100 Vol.%.

Durch Verbrennen der fossilen Brennstoffe mit Sauerstoff oder Sauerstoff angereicherter Luft wird die Energie zum Einschmelzen der Verbrennungsrückstände in den Schachtofen 10 eingebracht. Die heißen Verbrennungsgase strömen von unten durch den wassergekühlten Rost 16 und werden durch die Kugelschüttung gleichmäßig über den Schachtquerschnitt in die Verbrennungsrückstandsschüttung 21 hineinverteilt. Durch dieses Prinzip des direkten Gegenstromwärmeaustausches werden die Verbrennungsrückstände im unteren Teil der Verbrennungsrückstandsschüttung 21 geschmolzen. Im oberen Teil findet durch die direkte Abkühlung der Gase bis nahe Eintrittstemperatur der Verbrennungsrückstände eine optimale Energieausnutzung statt.

Die Verbrennungsabgase werden nach Austritt aus dem Oberofen 14 in einer Quenche 26 gequencht. In einem Gewebefilter 27 werden die leicht flüchtigen und kondensierbaren Abgasebestandteile abgeschieden. Die so vorgereinigten Abgase werden der Rauchgasreinigungsanlage 28 der Abfallverbrennungsanlage 11 zugeführt.

Durch die Verwendung von sauerstoffangereicherter Luft oder Sauerstoff als Oxidationsmedium, ist die Abgasmenge des Schachtofens 10 sehr gering. Bei Verwendung von reinem Sauerstoff beträgt diese nur ca. max. 3 % der Abgasmenge der Abfallverbrennungsanlage 11. Zur Erzeugung des Sauerstoffes wird eine VSA-Anlage (Vacuum Swing Adsorption) eingesetzt, die Sauerstoff mit einer Reinheit von 90 bis 93 % herstellt.

Der spezifische Energiebedarf beim Schmelzen im Schachtofen 10 ist bei Verwendung von reinem Sauerstoff als Oxidationsmedium mit ca. 0,9 MWh/t Verbrennungsrückstand ca. 30 % geringer als bei dem bekannten Schmelzverfahren in einer Schmelzwanne mit fossilem Brennstoff. Der spezifische Sauerstoffbedarf beträgt dabei max. 200 m³/t Verbrennungsrückstände.

Der auftretende Verschleiß der feuerfesten keramischen Kugeln wird vorteilhaft durch Zugabe neuer Kugeln 23 zu den Verbrennungsrückständen 12 kompensiert. Auf den wassergekühlten Rohren 20 bildet sich im stationären Betriebszustand ein gleichmäßiger Schlackenpelz, der die Rohre 20 vor hoher thermischer und mechanischer Beanspruchung schützt und eine vorzeitige Abkühlung der heißen Verbrennungsabgase verhindert.

Alternativ zu den flüssigen oder gasförmigen Brennstoffen können feste Brennstoffe, wie z.B. Koks verwendet werden. Der Koks wird in heißen Verbrennungsrückständen 12 kontinuierlich beigemischt. Das Koks / Rückstandsverhältnis entspricht dem Energieaufwand, der zum Einschmelzen und Überhitzen des Schachtofens mit Sauerstoff oder sauerstoffangereicherter Luft als Oxidationsmedium benötigt wird. Zusätzlich zu den Brennstoff-Sauerstoff-Brennern 18 zum Zünden der Verbrennungsrückstandsschüttung 21 unterhalb des wassergekühlten Rostes 16 sind oberhalb des wassergekühlten Rostes Sauerstoff-Injektionslanzen eingebaut. Das Oxidationsmedium wird mit den Injektionslanzen 30 mit hoher Geschwindigkeit zwischen 0,4 < M < 2,5 oberhalb der Kugeln 23 in die Verbrennungsrückstandsschüttung 21 eingeblasen.

Aufgrund der bei der Verwendung fester Brennstoffe auftretenden CO-Bildung wird das Abgas des Schachtofens 10 in einer Nachbrennkammer 31 mit einem Brenner 34 mit Sauerstoffüberschuß nachverbrannt. Zur Aufheizung auf 1200°C und Nachverbrennung der unverbrannten Gase in der Nachbrennkammer 31 werden Brennstoff 53 / O₂-Brenner 34 verwendet, die mit dem erforderlichen Sauerstoffüberschuß betrieben werden.

Feinkörnige Verbrennungsrückstände, wie z.B. Flugstaub, werden pelletiert und kontinuierlich den festen grobkörnigen Verbrennungsrückständen beigemischt. Die bei der Rauchgasreinigung von Abfallverbrennungsanlagen 11 anfallenden Adsorbentien, wie Aktivkohle, Aktivkoks und/oder Kalk- / Koks-Gemische können ebenfalls mit dem Schachtofen 10 entsorgt werden, indem diese mit den festen Verbrennungsrückständen 12 gemischt werden und im Schachtofen 10 verbrannt und eingeschmolzen werden.

Die Anwendung des Verfahrens auf die festen Verbrennungsrückstände liefert ein inertes Produkt, das aufgrund seiner basaltähnlichen Zusammensetzung und seiner Auslaugstabilität als Ersatz für natürliche Rohstoffe dient. Dieses Produkt wird mit wesentlich geringeren spezifischen Energie- und Investitionskosten erreicht, als bei allen bislang bekannten thermischen Verbrennungsrückstandsbehandlungsverfahren.

## Patentansprüche

1. Verfahren zum Einschmelzen von festen Verbrennungsrückständen wie Schlacken, Aschen und Flugstäube aus Abfallverbrennungsanlagen mit festen, flüssigen und/oder gasförmigen fossilen Brennstoffen in einer Schmelzvorrichtung,
gekennzeichnet durch die Zuführung der Verbrennungsrückstände (12) von der Abfallverbrennungsanlage (11) in die Einfüllöffnung (13) der Schmelzvorrichtung und der Ausbildung der Schmelzvorrichtung als Schachtofen (10) mit feuerfest ausgekleidetem Ofenraum (14, 15) und dem Einschmelzen der Verbrennungsrückstände (12) mittels eines Brennstoff / Sauerstoff-Gemisches oder mittels eines Brennstoff / Sauerstoff-Luft-Gemisches, welches unterhalb der Verbrennungsrückstandsschüttung (21) in den Schachtofen eingebracht wird.

2. Verfahren nach Anspruch 1,
dadurch gekennzeichnet,
daß die Verbrennungsrückstände im heißen Zustand dem Schachtofen (10) zugeführt werden.

3. Verfahren nach Anspruch 1 oder 2,
dadurch gekennzeichnet,
daß in dem Schachtofen (10) ein Rost (16) vorgesehen ist, auf dem die Verbrennungsrückstände (12) aufgeschüttet werden und bei Temperaturen zwischen 1300°C und 1500°C verbrannt und/oder eingeschmolzen werden.

4. Verfahren nach einem der Ansprüche 1 bis 3,
dadurch gekennzeichnet,
daß die festen Brennstoffe mit den Verbrennungsrückständen (12) gemischt und in den Schachtofen (10) eingebracht werden.

5. Verfahren nach einem der Ansprüche 1 bis 4,
dadurch gekennzeichnet,
daß der Rost (16) wassergekühlt wird und auf dem Rost eine oder mehrere Lagen aus einem feuerfesten Werkstoff bestehende Kugeln (23) angeordnet sind.

6. Verfahren nach einem der Ansprüche 1 bis 5,
dadurch gekennzeichnet,
daß der Sauerstoffgehalt des Oxidationsmediums 30 Vol.% < O₂ < 100 Vol.% beträgt.

7. Verfahren nach einem der Ansprüche 1 bis 6,
dadurch gekennzeichnet,
daß zur Erzeugung des Sauerstoffs mit einer Reinheit von 90 - 93 % eine VSA-Anlage (Vacuum Swing Adsorption) eingesetzt wird.

8. Vorrichtung zum Einschmelzen von festen Verbrennungsrückständen wie Schlacken, Aschen und Flugstäube aus Abfallverbrennungsanlagen mit festen, flüssigen und/oder gasförmigen fossilen Brennstoffen in einer Schmelzvorrichtung,
gekennzeichnet durch die Ausbildung der Schmelzvorrichtung als Schachtofen (10) mit feuerfest ausgekleidetem Ober- und Unterofen (14, 15), einem Rost (16) zwischen dem Oberofen (14) und dem Unterofen (15), mindestens einem unterhalb des Rosts (16) angeordneten Brenner (18), der an eine Brennstoff / Sauerstoff oder Brennstoff / Sauerstoff-Luft-Versorgung angeschlossen ist.

9. Vorrichtung nach Anspruch 8,
dadurch gekennzeichnet,
daß der Rost (16) aus wassergekühlten Rohren (20) besteht und auf dem Rost (16) eine oder mehrere Lagen Kugeln (23) aus einem feuerfesten Werkstoff angeordnet sind.
